# EUROPEAN PATENT SPECIFICATION

(11) **EP 0 939 066 B1**
(45) Date of publication and mention of the grant of the patent: **07.08.2002**
(21) Application number: 98400361.6
(22) Date of filing: 16.02.1998
(51) Int. Cl.: C04B 35/583

(54) **Method for forming high density boron nitride and high density agglomerated boron nitride particles**
Verfahren zur Bildung von Bornitrid hoher Dichte und agglomerierte Bornitridteilchen hoher Dichte
Procédé de formation de nitrure de bore de haute densité et particules de nitrure de bore agglomérées de haute densité

(43) Date of publication of application: 01.09.1999
(73) Proprietor: ADVANCED CERAMICS CORPORATION, Cleveland, Ohio 44101-4929 (US)
(72) Inventor: Shaffer, Gregory, Strongsville, OH 44136 (US); Hill, Richard F., Chargrin Falls, OH 44023 (US)
(74) Representative: Dubois-Chabert, Guy

(56) References cited:
- FR-A- 2 469 970
- US-A- 3 513 229
- DATABASE WPI Section Ch, Week 9113 Derwent Publications Ltd., London, GB; Class L02, AN 91-089702 XP002069656 & JP 03 033 046 A (MATSUSHITA ELEC IND CO LTD)

## Description

### FIELD OF THE INVENTION

The present invention relates to a method for forming high density boron nitride for use as precursor feedstock material in the conversion of hexagonal boron nitride to cubic boron nitride and as high density agglomerated boron nitride particles formed from such method for use as high thermal conductivity fillers.

### BACKGROUND OF INVENTION

The two conventional forms of hexagonal boron nitride are turbostratic boron nitride and ideal or graphitic boron nitride. The hexagonal form of boron nitride is used in the conversion to cubic boron nitride and as a filler material for many other applications particularly where high thermal conductivity and high electrical resistivity is required. Typically, turbostratic boron nitride is first purified into what is conventionally referred to as "high purity hexagonal boron nitride" by treatment at high temperature, typically between about 1800 °C to 1900°C, for removing volatile impurities and surface oxide contaminants. Such high temperature treatment causes the boron nitride to become highly agglomerated in consistency which must be broken down for suitable commercial application. Accordingly, current practice is to first mill the high purity boron nitride into a fine powder and then, for ease of handling, to cold press and granulate the boron nitride in one or more stages. The milling operation forms a fine powder of small particle size typically with 99.9% of all of the milled powder below -325 mesh. The average particle size of the milled powder lies between 5-11 µm. The density of the boron nitride pellets formed from the cold pressing operation is no greater than an average of about 1.80 g/cm³ or 80% of the theoretical density of hexagonal boron nitride independent of the number of repeated granulation and cold pressing stages.

In the conversion of high purity hexagonal boron nitride to cubic boron nitride the compacts or pellets of boron nitride formed by compaction are subjected to extremely high pressures and temperatures within the stable region of the cubic boron nitride phase diagram. The density of the boron nitride pellets is significant to the economics of the cubic boron nitride conversion process.

It has been discovered in accordance with the present invention that the density of cold pressed boron nitride powder may be substantially increased to a density of at least about 1.86g/cm³ and approximating 1.9g/cm³ i.e approximating 85% of theoretical by controlling the particle size distribution of the boron nitride particles prior to compaction so that the distribution of particle sizes is as wide as possible and preferably with the majority of the particles having a particle size above 50 µm. The preferred particle size range for the majority of the particles should be between 20-500 µm. It has been further discovered in accordance with the present invention that agglomerated particles of boron nitride formed from a wide boron nitride particle size distribution following cold press compaction and granulation will possess a density closer to the average density achieved with hot pressing. In addition its thermal conductivity for use as a filler is enhanced particularly for use as a filler material in polymer composites.

### SUMMARY OF THE INVENTION

The method of the present invention broadly comprises the steps of forming high purity hexagonal boron nitride; crushing said high purity hexagonal boron nitride into boron nitride particles extending in size over a size range of at least 100 µm with the majority of the particles having a particle size above 50 µm, cold pressing the crushed particles into a compacted form and granulating the compacted particles into a granulated powder with the operations of cold pressing and granulation occurring in one or more stages.

Agglomerated boron nitride particles of high density and high thermal conductivity are also formed from cold pressed hexagonal boron nitride in accordance with the present invention by the process of crushing high purity hexagonal boron nitride into boron nitride particles extending in size over a size range of at least 100 µm with the majority of the particles having a particle size above 50 µm, cold pressing the crushed particles into a compacted form, granulating the compacted form into a granulated powder, with the cold pressing and granulation steps occurring in one or more stages, to a suitable size for use as fillers of high thermally conductivity.

### BRIEF DESCRIPTION OF THE DRAWINGS

The advantages of the present invention will become apparent from the following detailed description of the present invention when read in conjunction with the accompanying drawings of which:
FIG 1 shows four schematic flow diagrams labeled A,B,C, and D comparing the standard prior art method of compaction labeled A for cold pressing high purity boron nitride with the alternate methods of the present invention labeled B.C., and D respectively ;
FIG 2 shows typical particle size distribution curves for the high purity boron nitride particles formed from the milling operation used in the standard compaction method A of Figure 1;
FIG 3 shows a corresponding particle size distribution curve for the high purity boron nitride particles formed from crushing high purity boron in each of the alternate methods B, C and D shown in Figure 1; and
FIG 4 is a graph showing the relationship of density to the powder compaction cycle i.e. number of powder compaction stages for milled and crushed powder.

### DETAILED DESCRIPTION OF THE INVENTION

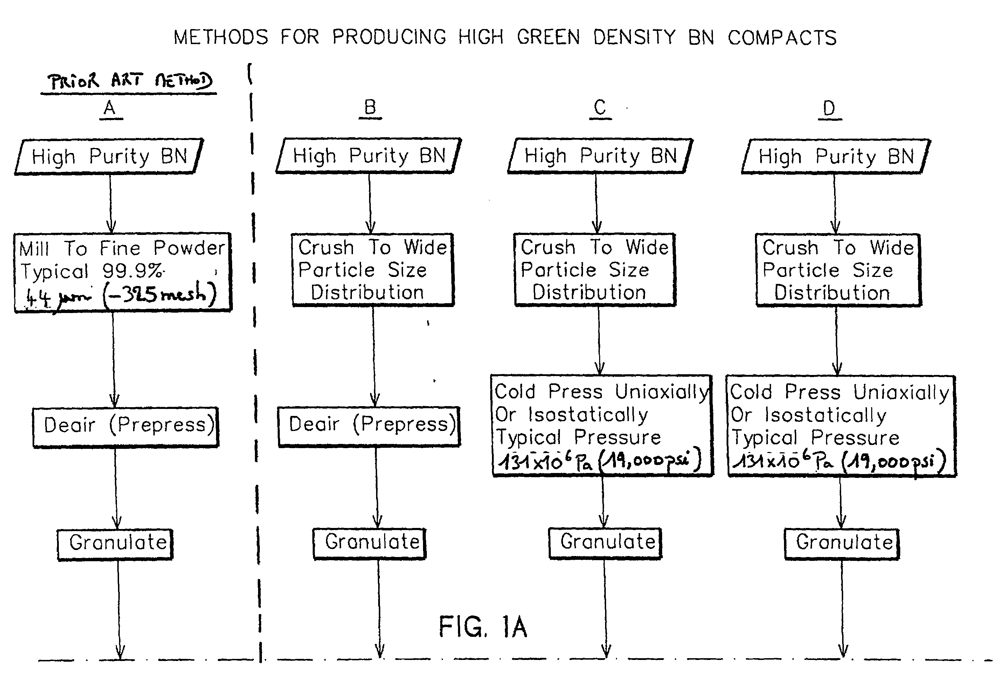

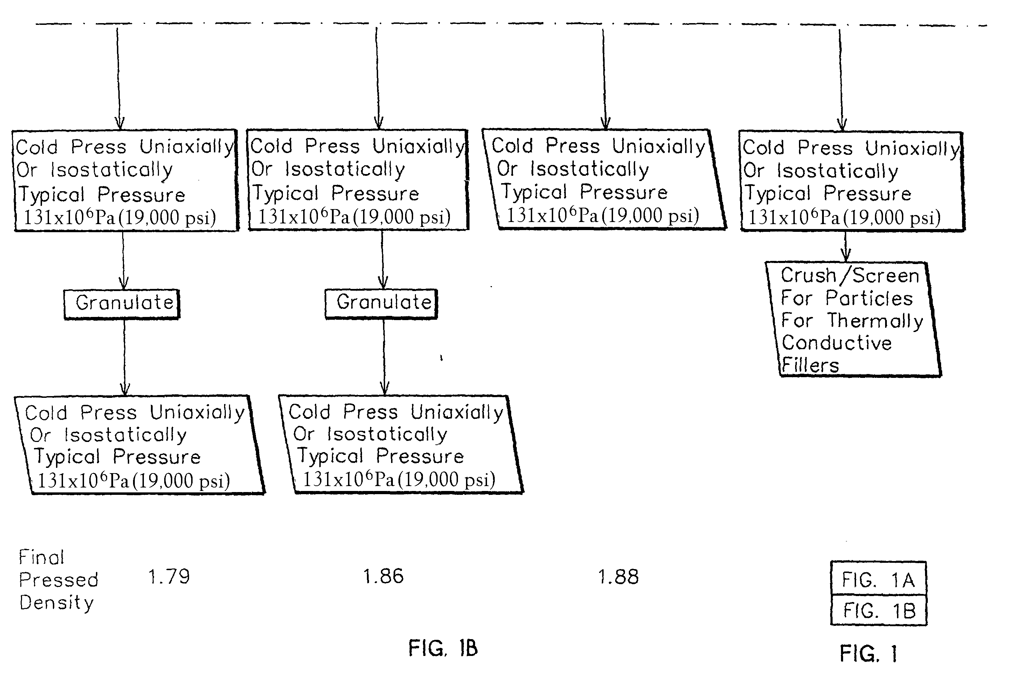

The schematic flow diagram labeled A in Figure 1 illustrates the current practice of forming a compact of cold pressed boron nitride starting from high purity boron nitride material. The high purity boron nitride material is converted into a very fine high purity hexagonal boron nitride (hBN) powder using a conventional milling operation utilizing, e.g., a high speed impact mill to reduce the BN to a fine powder. Typical properties of the fine high purity BN powder are shown below in Table I.

**TABLE 1**

| **Properties of Milled High Purity BN &** **Final Compacted Density (After 2 Cycles)** | | | | |
|---|---|---|---|---|
| Sample | 1 | 2 | 3 | 4 |
| % Oxygen | 0.605 | 0.488 | 0.275 | 0.548 |
| Surface Area (m²/g) | 5.67 | 5.48 | 5.26 | 6.39 |
| Tap Density (g/cm³) | 0.58 | 0.60 | 0.51 | .47 |
| % Soluble Berates | 0.33 | 0.16 | 0.10 | .26 |
| 44 µm (-325 Mesh) Sizing | 99.9 | 99.9 | 99.9 | 99.9 |
| Avg.Part.Size (µm) | 10.62 | 10.05 | 10.25 | 9.59 |
| Max. Part. Size (µm) | 42.2 | 29.9 | 29.9 | 29.9 |
| Density (g/cm³) (2X) | 1.80 | 1.79 | 1.77 | 1.81 |
| %Theoretical Density | 80.0 | 79.6 | 78.7 | 80.44 |

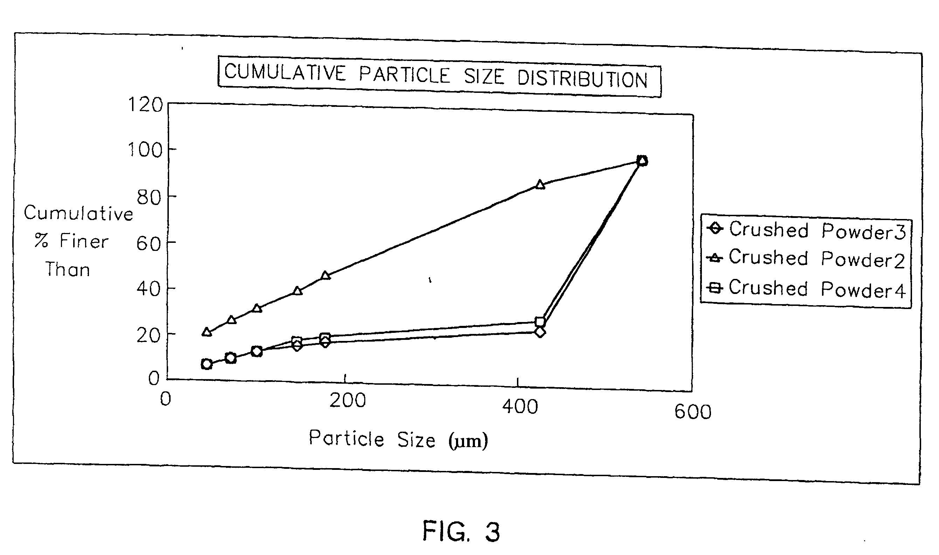

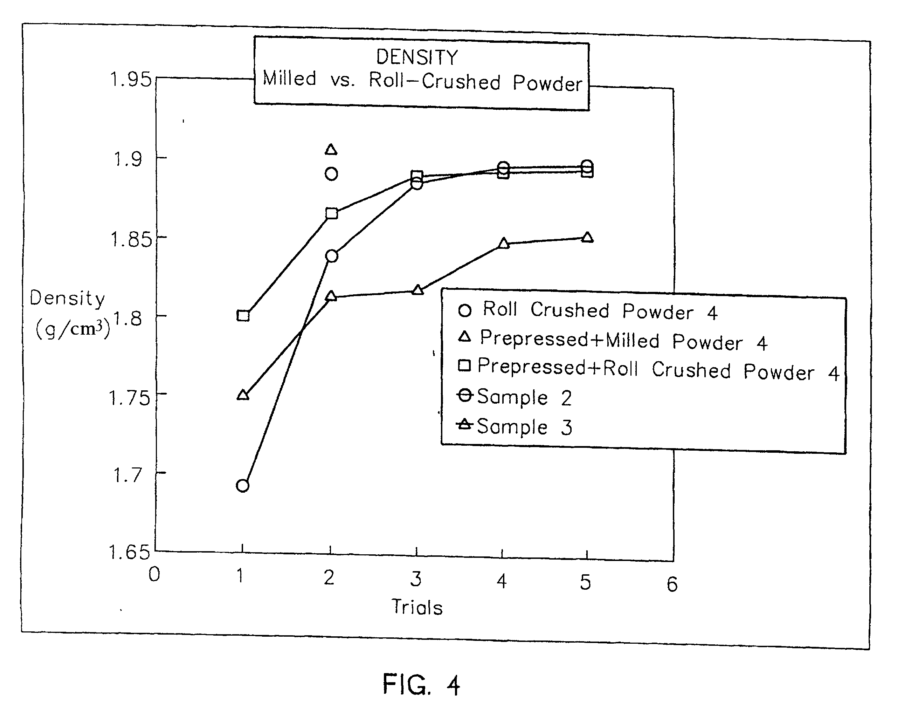

As evident from the above Table 1 in conjunction with Figure 1 column A the fine powder formed from the milling operation has a particle size distribution such that 99.9% is milled to below 44 µm (-325 mesh) and has an average particle size of 5-11 µm and a maximum particle size of no more than about 42 µm. The size of this powder is difficult to handle and to compact. With the powder being so fine, it needs to be deaired (prepressed) before compaction. If it is not deaired, the powder tends to flow out of the press die during compaction. Deairation is typically conducted by pressing the powder at a relatively high pressure in a large uniaxial press. The resultant cake is then granulated. This feedstock is then loaded into the hopper of an automated uniaxial press, for continuously pressing the powder into small pellets or plugs of material of e.g., 5,7 cm (2.25") diameter × 5cm (2")long. After the first pressing, the compacted boron nitride (BN) may again be granulated and again compacted in the automated uniaxial press. In fact the deairation/compaction/ granulation procedure may be repeated in any number of stages. As can be seen Figure 4, the highest green density achieved for a compact formed from milled powder was 1.74 g/cm³ or 77.3% of theoretical. By repeating the compaction/ granulation steps the density increased slightly as indicated in sample 4 in Table 1 to a density of 1.81g/cm³. Additional stages of compaction/ granulation will have little effect on the density as is confirmed in figure 4. Also, from observation the tops of the compacted pellets have a tendency to delaminate, indicating springback after pressing. It was discovered that the density of the compacted pellets may be increased to approximately 1.9g/cm³ i.e. up to 85% of theoretical by controlling the distribution of the boron nitride particle sizes before compaction by extending the range of particle sizes to a range of over at least 100 µm. The preferred method for achieving a wide particle size distribution is to crush the hard chunks of high purity BN resulting from the low purity boron nitride high temperature treatment. This yields a wide distribution of particle sizes as is evident in Table II shown below and in Figure 3. This is accomplished in accordance with the method of the present invention by substituting a crushing operation for the milling operation as is evident in Figure 1 flow sequence B,C and D respectively. The crushing operation as shown in flow diagram B may be followed by the standard deairation/granulation - compaction/granulation stages as used in the standard flow diagram A of Figure 1 or only by compaction/granulation stages without a deairation step as shown in the flow diagram sequences C or D of Figure 1. The final step of the flow diagram sequence D of Figure 1 is a crushing operation to produce a wide particle size dispersion of agglomerated boron nitride particles. This is particularly useful as a thermally conductive filler material particularly to fill polymers.

**TABLE II**

| **Properties of Crushed High Purity BN &** **Final Compacted Density (After 2 Cycles)** | | | | |
|---|---|---|---|---|
| Sample | 1* | 2 | 3 | 4 |
| Oxygen | 0.571 | 0.275 | 0.426 | .60 |
| Surface Area(m²/g) 3.16 | | 5.26 | 2.51 | 3.02 |
| Tap Density (g/cm³) | 0.76 | 0.85 | 0.92 | .89 |
| % Soluble Borates | ---- | 0.10 | 0.09 | .14 |

| Screen Sizing | | | | |
|---|---|---|---|---|
| +40 | ----- | 11.12 | 71.64 | 67.51 |
| -40 +80 | ----- | 41.46 | 12.04 | 13.72 |
| -80 +100 | ----- | 6.16 | 1.08 | 1.82 |
| -100 +150 | ----- | 8.36 | 2.20 | 3.01 |
| -150 +200 | ----- | 5.76 | 1.44 | 2.42 |
| -200 +325 | ----- | 7.32 | 2.32 | 2.90 |
| -325 | 11.16 | 19.82 | 9.28 | 8.62 |
| Density(g/cm³) (2X) | 1.86 | 1.89 | 1.91 | 1.84 |
| %Theoretical Density | 82.70 | 84.0 | 84.90 | 81.78 |

| | | | | |
|---|---|---|---|---|
| *Note: Sample 1 was crushed and screened to remove the fines. Samples 2 and 3 were not. | | | | |

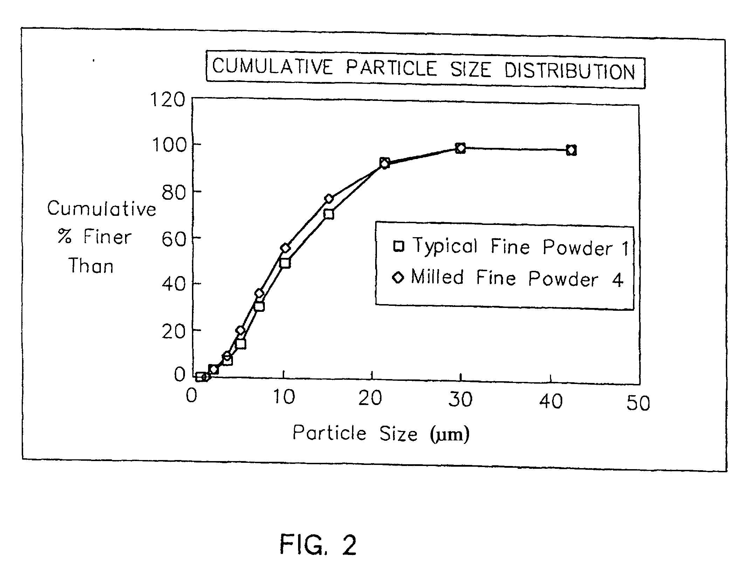

The above Table II shows the typical properties for roll crushed high purity boron nitride. Crushing of the high purity boron nitride material leaves a much wider particle size distribution and higher tap density, both of which are evident from table II result in a higher compaction density. The tap density of the crushed particles is at least .76g/cm³. The sample 1 lot was screened to remove the fines whereas samples 2, 3 and 4 were not screened. The tap density and precompacted density of Sample 1 is higher than the milled samples but is less than samples 2, 3 and 4. The deairation step was eliminated in Samples 1-3 of the roll crushed lots and a uniaxial pressing, granulation, uniaxial pressing procedure as described with the milled material was used for compaction. The compacted density is significantly higher than in Table I. Also, delamination did not occur with these samples, indicating less of a tendency for springback. The higher compacted densities and lower tendency for springback in the roll crushed material are useful for conversion to cubic boron nitride. The flow diagram D in Figure 1 may be used to produce boron nitride crushed agglomerated particles as high thermally conductive fillers.
The following are examples of the present invention:
Example 1- Highly agglomerated high purity boron nitride powder was crushed in a roll mill to the particle size distribution shown in Figure 3 with properties as shown in Table 2 column 3. This powder was compacted using a horizontal press at a pressure 131 x 10⁶ Pa (19,000 psi). The compacted pieces were granulated by forcing the material through a screen with openings approximately 1,27 x 10⁻²m (1\2 inch). The granulated particles were again compacted at 1,31 x 10⁶ Pa (19,000 psi) The procedure is outlined in Figure 1 in the flow diagram labeleed C. The density of the resultant compact was 1.91g/cm³.
   For comparison a highly agglomerated high purity boron nitride powder was milled to a fine powder using the standard milling procedure as shown in the flow sequence A of Figure 1. The properties of this powder Sample 4 are shown in Table 1 column 4. The particle size distribution of this powder is shown in Figure 2 as the curve labeled "Milled Fine Powder 4". This fine powder was deaired at 17,2 x 10⁶ Pa (2500 psi) and granulated followed again by compaction, granulation and compaction as outlined in Figure 1 flow diagram A. The density of the resultant compacts were only 1,81g/cm³
Example 2 - Highly agglomerated, high purity boron nitride powder was crushed in a two roll mill to the particle size distribution as shown in Figure 3 labeled as "Crushed Powder 4". The properties of this powder are shown in Table 2 column 4. This powder was compacted using a horizontal press at a pressure of 1,31 x 10⁶ Pa (19,000 psi). Four additional granulation / compaction steps as described in example 1 were performed. The resultant compact density was 1.91 g/cm³. The density of the compacts as a function of compaction cycles is shown on Figure 4, on the curve labeled "Roll Crushed Powder 4".
   In comparison the highly agglomerated high purity boron nitride powder was milled to a fine powder. The properties of this powder are shown in Table 1 column 4. The particle size distribution of this powder is shown in Figure 2 as the curve labeled "Milled Fine Powder 4". This fine powder was deaired at 17,2 x 10⁶ Pa (2500 psi) and granulated followed by the same five cycles of granulation and compaction as was done for the crushed powder. The density of the resultant compacts was only 1.84g/cm³. The density of the compacts as a function of compaction cycles is shown on Figure 4 on the curve labeled "Prepressed +Milled Powder 4".
Example 3 - Highly agglomerated, high purity boron nitride powder was crushed in a roll mill to the particle size distribution shown on Figure 3 labeled as "Crushed Powder 2". The properties of this powder are shown in Table 2 column 2. This powder was compacted using a horizontal press at a pressure of 131 x 10⁶ Pa (19,000 psi). The compacted pieces were granulated by forcing the material through a screen with openings approximately 1,27 x 10⁻² m (½ inch). The granulated particles were again compacted at 1,31 x 10⁶ Pa (19000 psi). The density of the resultant compact was 1.89 g/cm³. This should be compared with the four different fine milled powders of Table 1 in which the resultant compact densities are 1.80, 1.79, 1.77, and 1.81 g/cm³ respectively.
Example 4- Highly agglomerated high purity hexagonal boron nitride powder with the properties as indicated on Table 2 Column 4, was crushed using a roll mill to the particle size distribution shown on Figure 3 in the curve labeled "Crushed Powder 4". This crushed powder was compacted at 131 x 10⁶ Pa (19,000 psi) using a powder compaction press (uniaxial press), and was then formed into granules of 0,16 x 10⁻² m (1/16 inch) and finer using a granulator. The granules were once again compacted at 131 x 10⁶ Pa (19,000psi). These compacts were crushed using a sawtooth and roll crusher and screened through a 125 µm (120 mesh) screen, resulting in a powder that had a tap density of 0.68m²/g. The screened particles were added to a cresol novalak thermoset epoxy formulation with a phenol novalak hardener at a 65wt% BN loading, and then molded in a transfer press. The thermal conductivity of the molded compound was 7.4 W/m°C.

The pellets or compacts may again be crushed into a powder compound of agglomerates having a wide particle size distribution. These agglomerates are of higher density than corresponding agglomerates formed from milled powder undergoing the same steps.

## Claims

1. A method of forming pellets or agglomerates of high density boron nitride comprising the steps of forming high purity hexagonal boron nitride; crushing said high purity hexagonal boron nitride into boron nitride particles having a size distribution which extends over a minimum size range of 100 µm with the majority of the particles having a particle size above 50 µm, cold pressing the crushed particles into a compacted form and granulating the compacted particles into a granulated powder with the operations of cold pressing and granulation occurring in one or more stages for forming pellets of boron nitride or agglomerates of high density boron nitride, with the steps of cold pressing and crushing repeated until the density of the pellets or agglomerates is above 1.86g/cm³.

2. A method as defined in claim 1 wherein the majority of the particles have an average particle size above 200 µm.

3. A method as defined in claim 2 wherein said particle size range extends from below 20 µm to above 400 µm.

4. A method as defined in claim 3 wherein said particle size range extends up to 500 µm.

5. High density agglomerated particles of hexagonal boron nitride having a density above at least 1.86g/cm³ for use a high thermal conductivity filler obtainable by a cold forming process carried out at ambient temperature comprising crushing agglomerated chunks of relatively large size high purity hexagonal boron nitride into boron nitride particles having a size distribution which extends over a minimum size range of 100 µm with the majority of the particles having a particle size above 50 µm, cold pressing the crushed particles into a compacted form, granulating the compacted form into a granulated powder, cold pressing the granulated powder into a finally compacted form and crushing the finally compacted form into agglomerated particles of filler of high thermal conductivity particles with the steps of cold pressing and crushing repeated until the density is above at least 1.86g/cm³.

6. High density agglomerated particles of boron nitride as defined in claim 5 wherein when loaded into a polymer give a thermal conductivity of at least 7.4 W/m°C.

7. Boron nitride pellets having a density between 1.86 and 1.91g/cm³ for use in converting hexagonal boron nitride into cubic boron nitride obtainable by the process comprising crushing high purity hexagonal boron nitride particles having a size distribution extending over a minimum size range of 100 µm with the majority of the particles having a particle size above 50 µm, cold pressing the crushed particles into a compacted form, granulating the compacted particles into a granulated powder and cold pressing the granulated powder into pellets with the operations of cold pressing and granulation occurring in one or more stages.

## Patentansprüche

1. Verfahren zum Formen von Pellets oder Agglomeraten von hochdichtem Bornitrid, wobei die folgenden Schritte vorgesehen sind: Formen von hochreinem hexagonalen Bornitrid; Zerkleinern des erwähnten hochreinen hexagonalen Bornitrids in Bornitrid-Teilchen mit einer Größenverteilung, die sich über einen minimalen Größenbereich von 100 µm erstreckt, wobei der Hauptanteil der Teilchen eine Teilchengröße oberhalb 50 µm besitzt,
Kaltpressen der zerkleinerten Teilchen in eine kompakte Form und Granulieren der kompaktierten Teilchen in ein granuliertes Pulver mit den Operationen des Kaltpressens und Granulierens in einer oder mehreren Stufen zur Bildung von Pellets aus Bornitrid oder Agglomeraten von hochdichtem Bornitrid, wobei die Schritte des Kaltpressens und Zerkleiners wiederholt werden, bis die Dichte der Pellets oder Agglomerate oberhalb 1,86 g/cm³ liegt.

2. Verfahren nach Anspruch 1, wobei der Hauptteil der Teilchen eine durchschnittliche Teilchengröße oberhalb 200 µm besitzt.

3. Verfahren nach Anspruch 2, wobei der erwähnte Teilchengrößenbereich sich von unterhalb 20 µm bis oberhalb 400 µm erstreckt.

4. Verfahren nach Anspruch 3, wobei der erwähnte Teilchengrößenbereich sich bis zu 500 µm erstreckt.

5. Hochdichte agglomerierte Teilchen aus hexagonalem Bornitrid mit einer Dichte oberhalb von mindestens 1,86 g/cm³ zur Verwendung in einem Füller mit hoher thermischer Leitfähigkeit erhältlich durch einen Kaltformungsprozeß ausgeführt bei Umgebungstemperatur, wobei folgendes vorgesehen ist: Zerkleinern der agglomerierten Brocken von hochreinem hexagonalen Bornitrid relativ großer Größe in Bornitridteilchen mit einer Größenverteilung, die sich über einen maximalen Größenbereich von 100 µm erstreckt, wobei der Hauptteil der Teilchen eine Teilchengröße oberhalb 50 µm besitzt,
Kaltpressen der zerkleinerten Teilchen in eine kompaktierte Form, Granulieren der kompaktierten Form in ein granuliertes Pulver, Kaltpressen des granulierten Pulvers in eine schließlich kompaktierte Form, und Zerkleinern der schließlich kompaktierten Form in agglomerierte Teilchen des Füllers von Teilchen mit hoher thermischer Leitfähigkeit, wobei die Schritte des Kaltpressens und Zerkleinerns wiederholt werden, bis die Dichte oberhalb mindestens 1,86 g/cm³ ist.

6. Hochdichte agglomerierte Teilchen aus Bornitrid nach Anspruch 5, wobei dann, wenn diese in ein Polymer geladen sind, eine thermische Leitfähigkeit von mindestens 7,4 W/m °C ergeben.

7. Bornitridpellets mit einer Dichte zwischen 1,86 und 1,91 g/cm³ zur Verwendung beim Umwandeln von hexagonalem Bornitrid in kubisches Bornitrid erhältlich durch den Prozeß, der folgendes aufweist: Zerkleinern von hochreinem hexagonalen Bornitridteilchen in einer Größenverteilung, die sich über einen minimalen Größenbereich von 100 µm erstreckt, wobei der Hauptteil der Teilchen eine Teilchengröße von oberhalb 500 µm besitzt, Kaltpressen der zerkleinerten Teilchen in eine kompaktierte Form, Granulieren der kompaktierten Teilchen in ein granuliertes Pulver und Kaltpressen des granulierten Pulvers in Pellets, wobei die Operation des Kaltpressens und des Granulierens in einer oder mehreren Stufen erfolgt.

## Revendications

1. Procédé de formation de pastilles ou d'agglomérats de nitrure de bore de haute densité comprenant les étapes consistant à former du nitrure de bore hexagonal de grande pureté ; broyer ledit nitrure de bore hexagonal de grande pureté pour le réduire en particules de nitrure de bore ayant une répartition granulométrique s'étendant sur une plage granulométrique minimale de 100 µm, la majorité des particules ayant une taille de particules supérieure à 50 µm, presser à froid les particules broyées en une forme compactée et granuler les particules compactées en une poudre granulée, les opérations de pressage à froid et de granulation intervenant en une ou plusieurs étapes pour former des pastilles de nitrure de bore ou des agglomérats de nitrure de bore de haute densité, les étapes de pressage à froid et de broyage étant répétées jusqu'à ce que la densité des pastilles ou des agglomérats soit supérieure à 1,86 g/cm³.

2. Procédé selon la revendication 1, dans lequel la majorité des particules ont une taille de particules moyenne supérieure à 200 µm.

3. Procédé selon la revendication 2, dans lequel ladite plage des tailles de particules s'étend de moins de 20 µm à plus de 400 µm.

4. Procédé selon la revendication 3, dans lequel ladite plage des tailles de particules s'étend jusqu'à 500 µm.

5. Particules agglomérées de haute densité de nitrure de bore hexagonal ayant une densité au moins supérieure à 1,86 g/cm³ pour une utilisation en tant que charge de grande conductivité thermique, pouvant être obtenues par une procédé de formation à froid effectué à la température ambiante comprenant le broyage de blocs agglomérés relativement gros de nitrure de bore hexagonal de haute pureté en particules de nitrure de bore ayant une répartition granulométrique s'étendant sur une plage granulométrique minimale de 100 µm, la majorité des particules ayant une taille de particules supérieure à 50 µm, le pressage à froid des particules broyées en une forme compactée, la granulation de la forme compactée en une poudre granulée, le pressage à froid de la poudre granulée en une forme finalement compactée et le broyage de la forme finalement compactée en particules agglomérées de charge de particules de grande conductivité thermique, les étapes de pressage à froid et de broyage étant répétées jusqu'à ce que la densité soit au moins supérieure à 1,86 g/cm³.

6. Particules agglomérées de haute densité de nitrure de bore selon la revendication 5, lesquelles, une fois chargées dans un polymère, donnent une conductivité thermique d'au moins 7,4 W/m°C.

7. Pastilles de nitrure de bore ayant une densité comprise entre 1,86 et 1,91 g/cm³ destinées à être utilisées pour convertir du nitrure de bore hexagonal en nitrure de bore cubique, pouvant être obtenues par le procédé comprenant le broyage de particules de nitrure de bore hexagonal de haute pureté ayant une répartition granulométrique s'étendant sur une plage granulométrique minimale de 100 µm, la majorité des particules ayant une taille de particules supérieure à 50 µm, le pressage à froid des particules broyées en une forme compactée, la granulation des particules compactées en une poudre granulée et le pressage à froid de la poudre granulée en pastilles, les opérations de pressage à froid et de granulation intervenant en une ou plusieurs étapes.
